# EUROPEAN PATENT APPLICATION

(11) **EP 1 215 925 A1**
(43) Date of publication of application: **19.06.2002**
(21) Application number: 00830819.9
(22) Date of filing: 13.12.2000
(51) Int. Cl.: H04Q 7/22, H04L 12/58

(54) **Method for transmitting E-mail reply-message to a cellular mobile phone**

(71) Applicant: Goingtonight.com Societa' per Azioni, 55049 Viareggio (Province of Lucca) (IT)
(72) Inventor: Giusti, Vittorio Giovanni, 55049 Viareggio (Province of Lucca) (IT)
(74) Representative: Gervasi, Gemma, Dr.

(57) **Abstract**

The invention refers to a system to establish a communication among users of an e-mail service and users of mobile phone networks. The system provides for a co-operation between the technologies of the e-mail service centres and the text message technology of mobile phones, for example the SMS text message technology.

According to the invention, the system permits an user of a e-mail service, when he is replying to an other e-mail user, to establish an SMS communication with that user without knowing his phone number.

## Description

### Field of the invention

The present invention refers to the field of the communication systems among users of an e-mail network having a mobile communicator (e.g. a cellular phone) enabled to text message transmission, for example of the type based on the Short Message Service (SMS) technology.

### Background of the art

As it is known, at moment it is possible to address to a cellular phone owner a SMS message originated from an e-mail message.

A solution to that technical problem has been given for example by US5946629.

Unfortunately, the known systems present some drawbacks were a satisfactory co-operation between e-mail network and cellular network is required.

More specifically, an unsolved technical problem consists in that the above cited system simply permits an e-mail user to send a SMS message to a cellular phone user whose number is already known to the sender.

In other words, the conventional systems are able to reciprocally connect users of a "close" community composed by users who have to know both e-mail address and SMS number the other users.

Furthermore, the known system do not permit an e-mail sender to receive a potentially immediate SMS reply to the e-mail message in a univocal and secure way, i.e. without the need of communicate the SMS number to the addressee.

This limit of the known systems is particularly evident when a quick and short response to an e-mail message (possibly a complex message) from a large number of persons is required.

### Aim of the invention

An aim of the present invention is to overcome the drawbacks of the already known system and methods.

### Summary of the invention

The aim of the invention has been reached by a system and a method according to the annexed independent claims.

Further advantages have been obtained by a system and a method according one or more of the annexed secondary claims.

### List of drawings

The advantages of the invention will be evident from the following description and form the attached drawings, given as a non limiting example of the invention, in which:
- fig.1 schematically shows an e-mail message format according to the system of the invention;
- fig.2 schematically shows a second e-mail message format according to the system of the invention

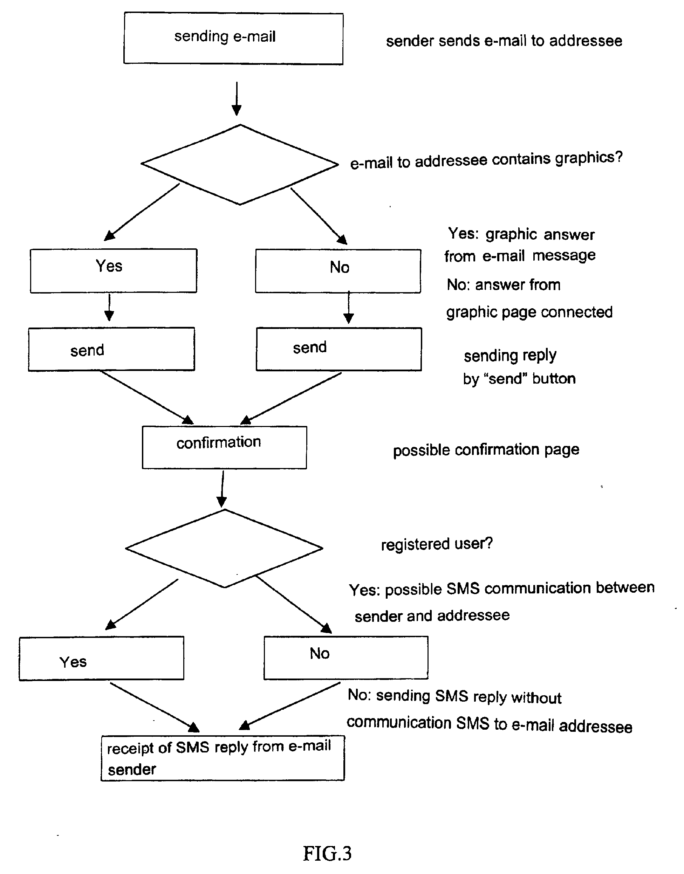

- fig.3 shows a flowchart of the method of the invention;

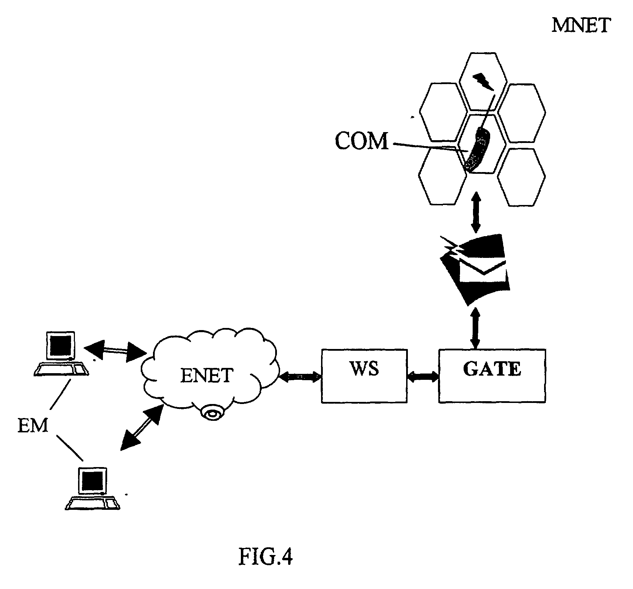

- fig.4 schematically shows the components of a system according to the invention.

### Detailed description of the invention

With reference to the annexed drawings a system according to the invention comprises:
- an e-mail transmission enabled network (ENET) comprising a plurality of e-mail transmitting/receiving units (EM) communicating through an e-mail service server;
- at least one network (MNET) of mobile communicators (COM) enabled to text message transmission, comprising at least one gateway (GATE) of text messages;
- a message managing centre of the transmitted messages;
- connecting means of said e-mail enabled network with said mobile network.

In a preferred embodiment of the system:
- the e-mail enabled network ENET is a network supporting Internet transmission protocols and languages (for example HTML, HTTP, ASP, PHP, CGI etc..) and e-mail protocols (like MIME, SMTP); the network MNET of mobile communicators is a network of cellular phones supporting the SMS text messages transmission technology, for example a GSM cellular network; said message managing centre is a Web Server WS provided with a message managing software able to receive a text message associated to a SMS number NR and to deliver to said gateway GATE a SMS message to the owner of the SMS number NR;

According to a preferred embodiment of the system of the invention, the web server further comprises:
- a database management software DB substantially containing the identifying data ID, and the SMS number NR of registered users and which able to associate ID to the corresponding NR;
- encryption software to generate an encryption code KCODE from the phone number NR of an user and to provide for a password PW enabling a registered user to access the system;
- a message managing software able to receive a text message together with said encryption KCODE of a user.

In a preferred use of the system, an authorised user ( a suitable registration procedure will be described in the following) sends to an e-mail addressee an e-mail message.

The message is received by the user through the e-mail server of ENET, and it includes a reply box, BOX, having a text field able to contain a text message associated to the encryption KCODE of the user.

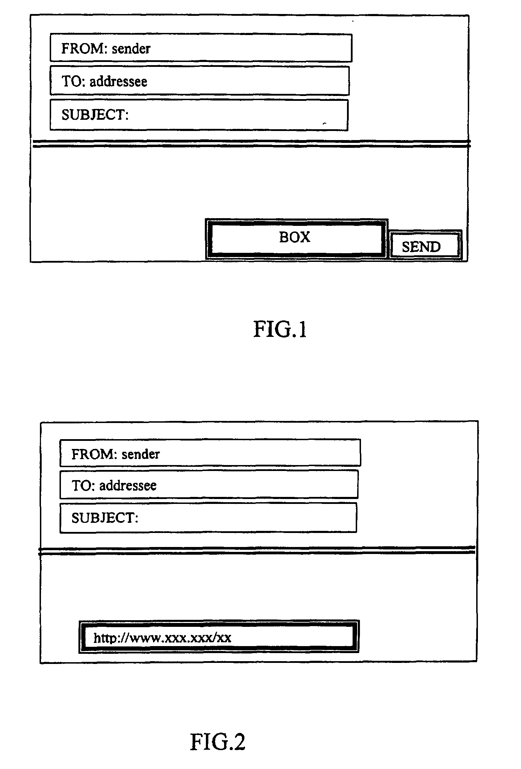

Depending on the e-mail software of the addressee, such box can be generated by WS incorporating a formatted component (for example a dialog box in HTML format, with graphic, formatted text, Fig.1) or, if the addressee software supports plain text e-mail format only (Fig.2), by incorporating in the body of the e-mail message an hypertextual link to a web page containing a text message box to which the addressee can access through his Internet browser software.

In the first case, the addressee can directly fill the text field of the dialog box from the e-mail message page and give a reply instruction to the web server (for example by an apposite "send" button corresponding to the dialog box). In the second case the same instruction will be given from the linked web page.

Preferably, after a reply instruction, a confirmation page will be visualised by the internet browser on the e-mail message addressee display, in order to guarantee the user that the correct SMS message will be delivered and possibly to permit the user to modify it.

Preferably, the confirmation page contains registration instructions to allow the addressee to register himself to the system.

Once confirmed, the reply message is received by the web server WS so that NR can be decrypted by the encryption software as a function of KCODE (which is contained in the reply message) and, if it is verified, the attached text message can be associated by the DB software to the corresponding SMS number and then delivered by the message managing software of WS to the GATE of the cellular network MNET.

For example, the reply formatted component incorporated in the e-mail message contains a text message and an instruction of the type "http://www.xxx.xxx/xxx.WS?auth= KCODE" where KCODE is utilised by an encryption software of the identified web server WS to verify the identity of the user and to associate the text message to his SMS number NR.

Advantageously, the e-mail sender will receive on his cellular phone an SMS message without the need of communicating a phone number to the addressee.

In the case that the addressee is a registered user of the system, the confirmation page allows him to communicate to the web server his password and SMS number, so that the e-mail sender will receive on the cellular phone the SMS reply message together with the phone number.

In this case a conventional SMS dialog is automatically established between the cellular phones of the registered users of the system.

As already said, a system according to the invention can require a user registration in order to guarantee form possible abuse of the transmitted data.

In that case, a user has to access the system web server WS and to ask for a registration.

The web sever will ask the user to communicate his identity data and a SMS number NR from which, if the user is not already registered in DB, an encryption software will generate a code KCODE and an enabling password PW.

Preferably, the web server sends PW, through GATE, to the cellular phone of the user who will have to insert it in suitable field of a registration web page, to validate the registration.

Advantageously, in this way the system immediately verifies if the user is the real owner of that cellular phone number.

Once received the password the user identity is verified and web server can insert the user data in the database management software DB.

The invention has been described with reference to preferred embodiments, but it is obvious that equivalent modification can be made without outgoing from the scope of the invention.

## Claims

1. Communication system comprising:
- a network (ENET) for e-mail messages transmission among a plurality of e-mail users, comprising an e-mail managing centre;
- a network (MNET) of mobile communicators (COM) enabled to text message service (SMS), comprising a centre (GATE) for delivering of messages;
- reply means to make available to an e-mail message addressee user an input box for a SMS message to be automatically transmitted as a reply to the sender of the e-mail message;
- a replay message managing centre able to receive from said addressee a reply text message and to deliver a corresponding SMS message to said SMS gateway GATE to be transmitted through (MNET) to said e-mail sender;
- means connecting said replay message managing centre with the centre (GATE) of said mobile network (MNET) for transmission and delivering of the SMS reply

2. System according to claim 1, wherein (ENET) is a network supporting lntemet transmission protocols and languages, said replay message managing centre is a web server WS, and said network (MNET) is a cellular phone network.

3. System according to claim 1, wherein said reply means comprise a reply dialog box in graphic format, preferably HTML format, incorporated in said e-mail message.

4. System according to claim 2, wherein said reply means comprise a reply dialog box in graphic format, preferably HTML format, incorporated in a web page of the web server, that page being connected to the e-mail message through an hypertextual link and it is suitable to be made available by a web pages browser of the addressee.

5. System according to claim 3 or 4, wherein said reply means comprise a send button to automatically send a reply to WS, the botton corresponding to said dialog box.

6. System according to claim 2, wherein said reply means does not comprise means to notify the addressee a SMS number (NR) of the mobile communicator of the e-mail sender.

7. System according to claim 6, wherein said web server is provided of database management software (DB) comprising identity data (ID) of the e-mail users and the corresponding numbers (NR) of the cellular phone of the same users.

8. System according to claim 6, wherein said web server comprise an encryption software in order to generate an user password (PW) and an encryption code (KCODE), in order to decrypt a SMS number (NR) from a code (KCODE) associated to said reply message, said password (PW) and said code (KCODE) being automatically associated to (NR) by the database software (DB).

9. Communication method among users of a network (ENET) for e-mail messages transmission comprising an e-mail server and a replay message managing centre (WS) and users of said network ENET and of a network (MNET) of mobile communicators (COM) enabled to text message service (SMS), provided with a centre (GATE) for delivering of messages, the method comprising the steps of:
- make available to an e-mail message addressee user reply means to automatically reply to the sender through a text message;
- connecting said centre (WS) of the e-mail network (ENET) with the gataway (GATE) of said mobile network (MNET) for transmission and delivering of the reply text message;
- transmitting said text message through MNET to the communicator number (NR) of the same e-mail message sender.

10. Method according to claim 9, wherein the SMS number of said sender is not notified to said addressee.

11. Method according to claim 10, wherein said network (ENET) supports Internet protocols and languages and said network (MNET) is a cellular phone network.

12. Method according to claim 11, wherein said reply means comprise a reply box provided with a button to automatically send to WS a reply, the box being incorporated in the e-mail message and containing a text field and a sender code (KCODE).

13. Method according to claim 11, wherein said reply means comprise an hypertextual link to a Web page comprising a reply box provided with a button to automatically send to WS a reply.

14. Method according to claim 12 or 13, wherein said centre (WS) is provided of a database software (DB) comprising: identifying data (ID) of users; SMS numbers (NR) of the users; an encryption software to generate said codes (KCODE) from said numbers (NR).

15. Method according to claim 14, wherein said centre (WS) decrypts in univocal way a number (NR) form said code (KCODE) and sends to that NR number the corresponding reply text message.
